# EUROPEAN PATENT APPLICATION

(11) **EP 4 700 678 A1**
(43) Date of publication of application: **25.02.2026**
(21) Application number: 24803717.8
(22) Date of filing: 09.05.2024
(51) Int. Cl.: G06Q 20/18, G06Q 20/14, G06Q 20/20, G01G 19/414, G06V 10/70, G06V 30/41, G06Q 30/06, G06K 19/06, B65G 43/08, B65G 37/00

(54) **METHOD AND APPARATUS FOR PRODUCT CHECKOUT IN UNMANNED STORE**

(30) Priority: 10.05.2023 KR 20230060267
(71) Applicant: Gaeasoft Co., Ltd., Seoul 03142 (KR)
(72) Inventor: KIM, Young Jun, Seoul 02502 (KR)
(74) Representative: BCKIP Part mbB
(86) International application number: PCT/KR2024/006201
(87) International publication number: WO 2024/232664

(57) **Abstract**

Disclosed are a method and an apparatus for product checkout in an unmanned store. The apparatus for product checkout in an unmanned store, according to an embodiment of the present invention, comprises: a first transfer unit that transfers a product; a first product recognition unit that recognizes that the product is placed on the first transfer unit; a weight sensor that measures the weight of the product; a scan unit that scans a barcode and an image of the product transferred by the first transfer unit; a processor that uses artificial intelligence learning data to identify what the product is, on the basis of the barcode and image of the product scanned by the scan unit and the weight of the product measured by the weight sensor; a product classification unit that classifies, on the basis of results of the identification of the product, the product so that the product is classified into a first area or a second area; a calculation unit that calculates a total price; a display unit that provides, to the user, the total price calculated by the calculation unit and a list of products; and a control unit that controls operations of the first transfer unit and the product classification unit.

## Description

### TECHNICAL FIELD

The present invention relates to a method and apparatus for product checkout in an unmanned store.

### BACKGROUND ART

The content described below provides only the background information related to an embodiment of the present invention, and does not constitute the prior art.

Attempts are made to reduce manpower and improve accuracy by automating the entire logistics process, such as production, shipping, transportation, unloading, packaging, storage, checkout, and the like of products. When logistics are automated, there is an effect of reducing the costs and preventing safety accidents according to reduction of manpower, and the time required for the logistics is shortened, and systematic management is possible.

In particular, when a user pays for products in a store, there is a problem in that as a worker in the store performs product checkout by scanning barcodes of products one by one using a barcode scanning device, unnecessary waiting time of customers increases due to increase in the time required for product checkout, and therefore, congestion in the store increases according thereto, and costs for managing operation of the store also increases due to hiring of employees for product checkout.

Accordingly, there is a demand for techniques that can quickly and accurately perform unmanned checkout for products that a customer desires to purchase.

### DISCLOSURE OF INVENTION

### TECHNICAL PROBLEM

An object of the present invention is to provide a product checkout method in an unmanned store.

Another object of the present invention is to perform product checkout quickly and accurately by increasing the product recognition rate through artificial intelligence learning data.

Another object of the present invention is to improve the accuracy of product classification by using a product classification unit including a conveyor belt.

### TECHNICAL SOLUTION

To accomplish the above objects, according to one aspect of the present invention, there is provided an unmanned store product checkout apparatus comprising: a first transfer unit for transferring a product to scan the product desired by a user to purchase; a first product recognition unit installed at a first point where transfer of the product begins by the first transfer unit, to recognize that the product is placed on the first transfer unit; a weight sensor installed at a lower one side of the first transfer unit, to measure a weight of the product; a scan unit installed to be spaced apart from the first transfer unit toward the top as much as a preset distance, to scan a barcode and an image of the product transferred by the first transfer unit; a processor for identifying what the product is by using artificial intelligence learning data on the basis of the barcode and image of the product scanned by the scan unit and the weight of the product measured by the weight sensor; a product classification unit including a second transfer unit arranged to be in contact with a second point, where transfer of the product by the first transfer unit is terminated, to move the product left and right to be classified into a first area or a second area and classify the product by operating the second transfer unit on the basis of a result of product identification; a calculation unit for calculating a total price by adding up both a first price obtained by adding prices of the products classified into the first area and a second price obtained by adding prices of the products classified into the second area and confirmed by a manager; a display unit for providing the user with the total price, which is calculated by the calculation unit, and a product list; and a control unit for controlling operations of the first transfer unit and the product classification unit on the basis of a result of product recognition performed by the first product recognition unit and a result of product identification performed by the processor.

The scan unit may include: a barcode scanner for recognizing a barcode of the product; and an image scanner for acquiring image information by scanning an image of the product.

The processor may identify the product as a scanned product corresponding to identification information included in the barcode when the barcode is recognized, acquire a product name and a character string from the image information and identify the product as a scanned product on the basis of the image information, the product name, and the character string using artificial intelligence learning data when the barcode is not recognized, compare the weight of the product measured using the weight sensor with weight information included in product information corresponding to the scanned product, transmit a first signal indicating that the product has been normally identified to the control unit when the product is verified as a scanned product as a result of the comparison, and transmit a second signal indicating that the product has not been normally identified to the control unit when the product is not verified as a scanned product or it is verified that the product is not a scanned product as a result of the comparison.

The control unit may control the product classification unit to move the product in a direction of the first area so that the product can be classified into the first area when the first signal is received from the processor, and control the product classification unit to move the product in a direction of the second area so that the product can be classified into the second area when the second signal is received from the processor.

The first transfer unit may include: a third transfer unit for transferring the product from the first point to a third point where scanning begins by the scan unit; and a fourth transfer unit arranged to be in contact with the third transfer unit at the third point to transfer the product from the third point to the second point, wherein the unmanned store product checkout apparatus may further comprise a second product recognition unit installed at the third point to recognize that the product has arrived at the third point, and the control unit may control the third transfer unit and the fourth transfer unit to operate when it is recognized that a product is placed through the first product recognition unit, control the third transfer unit to stop the operation when it is recognized that the product has arrived at the third point through the second product recognition unit, and control the third transfer unit to operate so that the product located at the third point may be transferred to the fourth transfer unit when there is no product of which the identification through the processor has not been completed.

According to another aspect of the present invention, there is provided an unmanned store product checkout method comprising the steps of: receiving user information from a user terminal; recognizing a product placed on a first transfer unit through a first product recognition unit; scanning the product transferred by the first transfer unit through a scan unit when the product is recognized; identifying the product through a processor on the basis of a result of scanning the product; classifying the product into a first area or a second area through a product classification unit according to a result of the identification; calculating a total price by adding up prices of the classified products through a calculation unit; and providing the total price to the user terminal.

The step of scanning the product includes the steps of: scanning a barcode and acquiring scanned product information corresponding to the barcode when the barcode of the product is recognized, and acquiring image information by scanning an entire image of the product when the barcode of the product is not recognized, specifying the product as an unconfirmed product when the barcode of the product is not recognized or the image information of the product is not acquired, and acquiring a product name of the product from the image information when the barcode of the product is not recognized after the step of scanning the product; and acquiring scanned product information corresponding to the product, of which the image information is acquired, on the basis of the image information and the product name using artificial intelligence learning data, wherein the artificial intelligence learning data may include data obtained by learning a size, a shape, a name, and a weight of products sold in an unmanned store.

The product checkout method may further comprise, after the step of recognizing a product placed on a first transfer unit, the step of measuring a weight of the product using a weight sensor, wherein the step of classifying the product may include the steps of: comparing weight information of a scanned product included in the scanned product information with a measured weight of the product; classifying the product into the first area to be sent to a user when the product is verified as the scanned product as a result of the comparison, and classifying the product into the second area to be sent to the manager when the product is verified as a different product as a result of the comparison or when the product is an unconfirmed product; and transmitting the number of products classified into the second area, device information, and the user information to a manager terminal.

The step of calculating a total price may include the step of recognizing both the products classified into the first area and the second area as products purchased by the user, and calculating a third price by adding up a first price obtained by adding prices of the products classified into the first area and a second price obtained by adding prices of the products classified into the second area, and the step of providing the total price may include the steps of: generating a product list including all the classified products; and providing the product list and the third price to the user through the user terminal and a display unit.

The step of receiving user information may include the step of receiving membership information of the user generated using the user information, and the product checkout method may further comprise, after the step of providing the total price, the step of accumulating purchase points corresponding to the third price in membership points included in the membership information when payment for the products is completed by the user, wherein the step of accumulating purchase points may include the step of granting additional purchase points at a preset first ratio corresponding to a ratio of the number of products purchased by the user to the number of products of which the barcode is recognized through the scan unit, and the step of providing the total price may include the step of providing the user terminal with a fourth price obtained by applying a preset discount rate of a second ratio, corresponding to the section where the membership points are included, to the third price.

### ADVANTAGEOUS EFFECTS

According to the present invention, a product checkout method in an unmanned store can be provided.

In addition, according to the present invention, product checkout can be performed quickly and accurately by increasing the product recognition rate through artificial intelligence learning data.

In addition, according to the present invention, the accuracy of product classification can be improved by using a product classification unit including a conveyor belt.

### BRIEF DESCRIPTION OF THE DRAWINGS

FIG. 1 and FIG. 2 are views showing the external appearance of an unmanned store product checkout apparatus according to an embodiment of the present invention.
FIG. 3 is a block diagram showing the configuration of an unmanned store product checkout apparatus according to an embodiment of the present invention.
FIG. 4 is a block diagram showing the configuration of a scan unit of an unmanned store product checkout apparatus according to an embodiment of the present invention.
FIG. 5 is a block diagram showing entities for product checkout in an unmanned store according to an embodiment of the present invention.
FIG. 6 is a flowchart illustrating an unmanned store product checkout method according to an embodiment of the present invention.
FIG. 7 is a flowchart illustrating an unmanned store product checkout method according to an embodiment of the present invention.
FIG. 8 is a flowchart illustrating an unmanned store product checkout method according to an embodiment of the present invention.
FIG. 9 is a flowchart illustrating an unmanned store product checkout method according to an embodiment of the present invention.
FIG. 10 is a flowchart illustrating an unmanned store product checkout method according to an embodiment of the present invention.

### BEST MODE FOR CARRYING OUT THE INVENTION

The present invention will be described in detail with reference to the accompanying drawings. Herein, repetitive descriptions, well-known functions, and detailed descriptions of the configurations that may unnecessarily obscure the gist of the present invention are omitted. The embodiments of the present invention are provided to explain the present invention to those skilled in the art more completely. Accordingly, the shapes and sizes of the elements in the drawings may be exaggerated for clarity.

Throughout the specification, when a part is described to "include" a component, this does not mean that it excludes other components, but that it may further include other components, unless stated otherwise.

Hereinafter, a preferred embodiment according to the present invention will be described in detail with reference to the accompanying drawings.

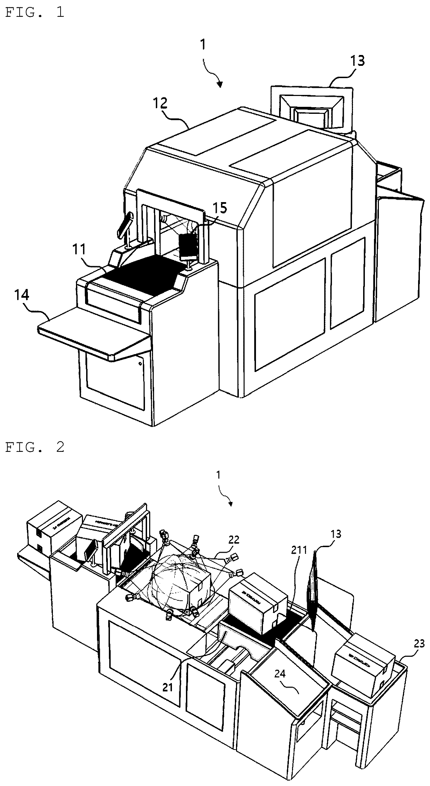

FIG. 1 and FIG. 2 are views showing the external appearance of an unmanned store product checkout apparatus according to an embodiment of the present invention.

Referring to FIGS. 1 and 2, an unmanned store product checkout apparatus 1 according to an embodiment of the present invention may include a product transfer device 11, a product scanning device 12, a checkout result display device 13, a product holder 14, a QR code recognition unit 15, a product classification device 21, a plurality of image scanners 22, a normal checkout product discharge unit 23, and an abnormal checkout product discharge unit 24.

The product transfer device 11 may include a conveyor belt through which products are transferred for checkout.

The product scanning device 12 may include a plurality of image scanners 22 for scanning products transferred by the product transfer device 11. Here, the plurality of image scanners 22 is arranged separately above and under the conveyor belt included in the product transfer device 11, and may image-scan products from various directions. Products that have been correctly recognized after the image scanning is completed may be discharged to the normal checkout product discharge unit 23.

In addition, the product classification device 21 may include a product classification conveyor belt 211. After the product scanning is completed using the product scanning device 12, the product may be transferred to the product classification device 21. Here, when the product is correctly recognized, the product classification device 21 may move the product toward the normal checkout product discharge unit 23, and the product classification conveyor belt 211 may operate so that the product may be discharged to the normal checkout product discharge unit 23. On the contrary, when the product is not correctly recognized, the product classification device 21 may move the product toward the abnormal checkout product discharge unit 24, and the product classification conveyor belt 211 may operate so that the product may be discharged to the abnormal checkout product discharge unit 24. The product discharged to the abnormal checkout product discharge unit 24 may be included in the checkout result after being confirmed by the manager.

The product scanning device 12 may gradually increase the accuracy of image scanning through deep learning. As the number of image scanning of products increases, the accuracy of image scanning may increase.

The checkout result display device 13 may include a list of entire products and separately display the products discharged to the normal checkout product discharge unit 23 and the products discharged to the abnormal checkout product discharge unit 24.

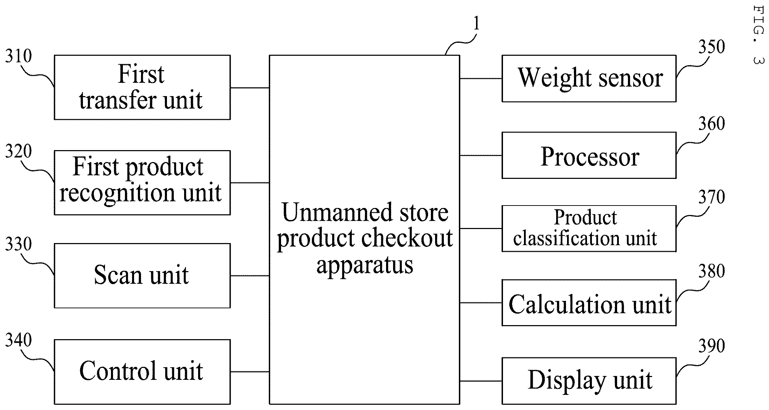

FIG. 3 is a block diagram showing the configuration of an unmanned store product checkout apparatus according to an embodiment of the present invention.

Referring to FIG. 3, the unmanned store product checkout apparatus according to an embodiment of the present invention may include a first transfer unit 310, a first product recognition unit 320, a scan unit 330, a control unit 340, a weight sensor 350, a processor 360, a product classification unit 370, a calculation unit 380, and a display unit 390.

The first transfer unit may transfer a product to scan the product desired by a user to purchase.

The first product recognition unit is installed at a first point where transfer of the product begins by the first transfer unit, and may recognize that the product is placed on the first transfer unit.

A weight sensor is installed at a lower one side of the first transfer unit to measure the weight of the product.

The scan unit is installed to be spaced apart from the first transfer unit toward the top as much as a preset distance to scan the barcode and image of the product transferred by the first transfer unit.

The processor may identify what the product is by using artificial intelligence learning data on the basis of the barcode and image of the product scanned by the scan unit and the weight of the product measured through the weight sensor.

The product classification unit includes a second transfer unit arranged to be in contact with a second point, where transfer of the product by the first transfer unit is terminated, to move the product left and right to be classified into a first area or a second area and classify the product by operating the second transfer unit on the basis of a result of product identification.

The calculation unit may calculate the total price by adding up both a first price obtained by adding the prices of the products classified into the first area and a second price obtained by adding the prices of the products classified into the second area and confirmed by the manager.

The display unit may provide the user with the total price calculated by the calculation unit, and a product list.

The control unit may control the operation of the first transfer unit and the product classification unit on the basis of a result of product recognition performed by the first product recognition unit and a result of product identification performed by the processor.

Here, the first transfer unit may not operate when it is recognized through the first product recognition unit that a product is not placed, operate to transfer the product when it is recognized that a product is placed, and stop the operation when it is not recognized that another product is placed through the first product recognition unit until a preset time is elapsed after recognizing that a product is placed through the first product recognition unit.

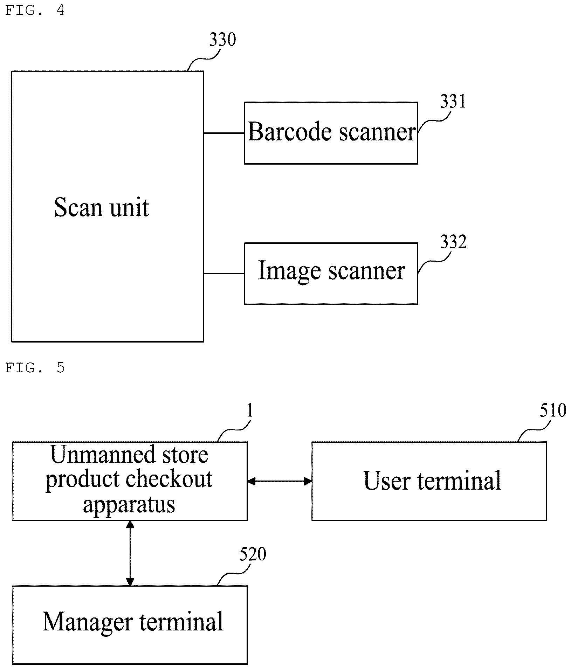

FIG. 4 is a block diagram showing the configuration of a scan unit of an unmanned store product checkout apparatus according to an embodiment of the present invention.

Referring to FIG. 4, the scan unit of the unmanned store product checkout apparatus according to an embodiment of the present invention may include a barcode scanner 331 and an image scanner 332.

The barcode scanner may recognize the barcode of a product.

The image scanner may acquire image information by scanning the image of a product.

When a barcode is recognized, the processor identifies the product as a scanned product corresponding to the identification information included in the barcode, and when the barcode is not recognized, the processor may acquire a product name and a character string from the image information, and identify the product as a scanned product on the basis of the image information, the product name, and the character string using artificial intelligence learning data.

In addition, the processor may compare the weight of the product measured using the weight sensor with weight information included in the product information corresponding to the scanned product, transmit a first signal indicating that the product has been normally identified to the control unit when the product is verified as a scanned product as a result of the comparison, and transmit a second signal indicating that the product has not been normally identified to the control unit when the product is not verified as a scanned product or it is verified that the product is not a scanned product as a result of the comparison.

At this point, when the first signal is received from the processor, the control unit may control the product classification unit to move the product in the direction of the first area so that the product can be classified into the first area, and when the second signal is received from the processor, the control unit may control the product classification unit to move the product in the direction of the second area so that the product can be classified into the second area.

According to an embodiment, the first transfer unit may include a third transfer unit that transfers the product from the first point to a third point where scanning begins by the scan unit, and a fourth transfer unit arranged to be in contact with the third transfer unit at the third point to transfer the product from the third point to the second point. That is, the conveyor belt of the third transfer unit and the conveyor belt of the fourth transfer unit are arranged to be in contact with each other at the third point or the fourth transfer unit is arranged at a lower position than the third transfer unit so that the product may be continuously transferred through the third transfer unit and the fourth transfer unit.

The unmanned store product checkout apparatus may further include a second product recognition unit installed at the third point to recognize that the product has arrived at the third point.

At this point, the control unit may control the third transfer unit and the fourth transfer unit to operate when it is recognized through the first product recognition unit that a product is placed, control the third transfer unit to stop the operation when it is recognized through the second product recognition unit that the product has arrived at the third point, and control the third transfer unit to operate so that the product placed at the third point may be transferred to the fourth transfer unit when there is no product of which the identification through the processor has not been completed.

Through this, accuracy of product classification can be improved by scanning and identifying products one by one through the scan unit and the processor.

As an optional embodiment, the unmanned store product checkout apparatus may include a third product recognition unit installed at a fourth point, where products enter the first area, to recognize products classified by the product classification unit to be sent to the first area.

Specifically, the third product recognition unit may recognize products classified into the first area after being classified by the product classification unit, and count the number of products moved to the first area.

At this point, the unmanned store product checkout apparatus compares, through the processor, the number of times of transmitting the first signal to send products to the first area with the number of products counted through the third product recognition unit, and when there is a difference as a result of the comparison, it may generate a list of products classified to be sent to the first area, and transmit the list to the manager terminal.

Here, the manager may confirm the list through the manager terminal, and confirm whether the products included in the list are classified incorrectly.

Through this, when a product verified as a scanned product is incorrectly classified into the second area, this problem can be resolved through the confirmation procedure.

FIG. 5 is a block diagram showing entities for product checkout in an unmanned store according to an embodiment of the present invention.

Referring to FIG. 5, the entities for product checkout in an unmanned store according to an embodiment of the present invention include the unmanned store product checkout apparatus 1, a user terminal 510 and a manager terminal 520.

The unmanned store product checkout apparatus 1 may refer to an apparatus that receives user information from the user terminal 510, recognizes products scanned by the scan unit as products purchased by the user using the user terminal, and calculates the total price.

The unmanned store product checkout apparatus 1 may be an apparatus that provides the calculated total price to the user terminal 510.

The unmanned store product checkout apparatus 1 may be an apparatus that transmits information on unconfirmed products among the scanned products to the manager terminal 520.

The user terminal 510 may be a device that provides user information to the unmanned store product checkout apparatus 1.

The user terminal 510 may be a device that receives the total price from the unmanned store product checkout apparatus 1.

The manager terminal 520 may be a device that receives information on unconfirmed products among the scanned products from the unmanned store product checkout apparatus 1.

The unmanned store product checkout apparatus 1 and the user terminal 510, and the unmanned store product checkout apparatus 1 and the manager terminal 520 may be interconnected through a communication network, respectively.

The communication network refers to a connection path for transmitting and receiving data between the entities. For example, the communication network may encompass wired networks such as Local Area Network (LAN), Wide Area Network (WAN), Metropolitan Area Network (MAN), Integrated Service Digital Network (ISDN), and the like, and wireless networks such as wireless LAN, CDMA, Bluetooth, satellite communication, and the like. However, the scope of communication networks that can be applied to the present invention is not limited thereto.

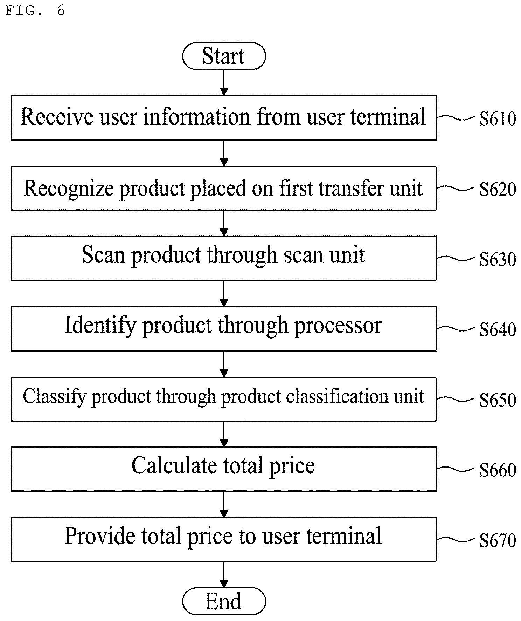

FIG. 6 is a flowchart illustrating an unmanned store product checkout method according to an embodiment of the present invention.

Referring to FIG. 6, in the unmanned store product checkout method according to an embodiment of the present invention, first, user information may be received from the user terminal (S610).

Next, a product placed on the first transfer unit may be recognized through the first product recognition unit (S620).

Next, when the product is recognized, the product transferred by the first transfer unit may be scanned through the scan unit (S630).

At this point, when the barcode of the product is recognized, the barcode is scanned to acquire scanned product information corresponding to the barcode, and when the barcode of the product is not recognized, the entire image of the product may be scanned to acquire image information.

In addition, when the barcode of the product is not recognized or the image information of the product is not acquired, the product may be specified as an unconfirmed product.

Next, the product may be identified through the processor on the basis of the result of scanning the product (S640).

Next, the product may be classified through the product classification unit to be classified into the first area or the second area according to a result of the identification (S650).

Next, the total price may be calculated by adding up the prices of the classified products through the calculation unit (S660).

Next, the total price may be provided to the user terminal (S670).

According to an embodiment, after the step of recognizing a product placed on the first transfer unit, the weight of the product may be measured using the weight sensor.

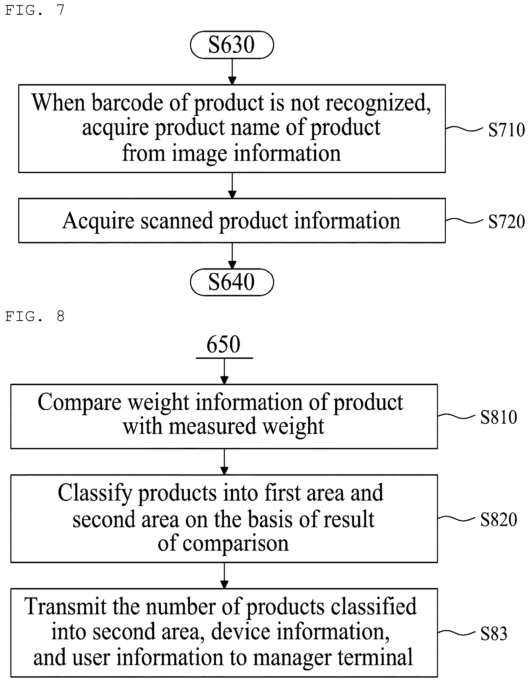

FIG. 7 is a flowchart illustrating an unmanned store product checkout method according to an embodiment of the present invention.

Referring to FIG. 7, in the unmanned store product checkout method according to an embodiment of the present invention, when the barcode of the product is not recognized after the step of scanning the product, the product name of the product may be acquired from the image information (S710).

Next, scanned product information corresponding to the product, of which the image information is acquired, may be acquired on the basis of the image information and the product name using artificial intelligence learning data (S720).

Here, the artificial intelligence learning data may include data obtained by learning the size, shape, name, and weight of products sold in an unmanned store.

FIG. 8 is a flowchart illustrating an unmanned store product checkout method according to an embodiment of the present invention.

Referring to FIG. 8, in the unmanned store product checkout method according to an embodiment of the present invention, first, weight information of the scanned product included in the scanned product information may be compared with the measured weight of the product (S810).

Next, when the product is verified as a scanned product as a result of the comparison, the product may be classified into the first area to be sent to the user, and when the product is verified as a different product as a result of the comparison or when the product is an unconfirmed product, the product may be classified into the second area to be sent to the manager (S820).

Next, the number of products classified into the second area, device information, and user information may be transmitted to the manager terminal (S830).

At this point, at step S660, both the products classified into the first area and the second area may be recognized as products purchased by the user, and a third price may be calculated by adding up the first price obtained by adding the prices of the products classified into the first area and the second price obtained by adding the prices of the products classified into the second area.

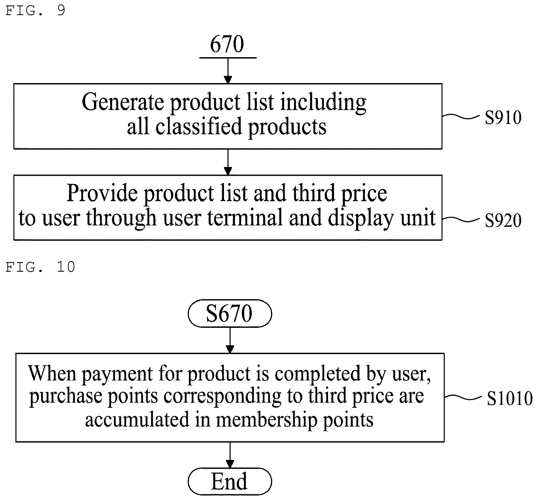

FIG. 9 is a flowchart illustrating an unmanned store product checkout method according to an embodiment of the present invention.

Referring to FIG. 9, in the unmanned store product checkout method according to an embodiment of the present invention, first, a product list including all the classified products can be generated (S910).

Next, the product list and the third price may be provided to the user through the user terminal and the display unit (S920).

FIG. 10 is a flowchart illustrating an unmanned store product checkout method according to an embodiment of the present invention.

Referring to FIG. 10, in the unmanned store product checkout method according to an embodiment of the present invention, membership information of the user generated using the user information can be received at step S610.

Then, when payment for the products is completed by the user after the step of providing the total price, purchase points corresponding to the third price may be accumulated in the membership points included in the membership information (S1010).

At this point, at step S1010, additional purchase points may be granted at a preset first ratio corresponding to the ratio of the number of products purchased by the user to the number of products of which the barcode is recognized through the scan unit.

In addition, at step S670, the user terminal may be provided with a fourth price obtained by applying a preset discount rate of a second ratio, corresponding to the section where the membership points are included, to the third price.

As an optional embodiment, when the product list is generated, a first product list of the products classified into the first area and a second product list of the products classified into the second area may be generated, and the generated first product list and second product list may be provided to the user terminal.

Specifically, the unmanned store product checkout apparatus may first generate a first product list of the products classified into the first area.

At this point, a preset first or second mark may be displayed next to each product name included in the first product list.

Here, the first mark may mean that it is verified that scanned product information is acquired by scanning the barcode using the barcode scanner, and the acquired scanned product information matches the product information.

In addition, the second mark may mean that it is verified that image information of the product is acquired through the image scanner, scanned product information is acquired based on the image information, and the acquired scanned product information matches the product information.

Next, when the products classified into the second area have been confirmed by the manager, the unmanned store product checkout apparatus may generate the second product list of the products classified into the second area.

At this point, a preset third mark may be displayed next to each product name included in the second product list.

Here, the third mark may mean that the product is an unconfirmed product or a product verified as a product different from the scanned product information and confirmed by the manager.

At this point, at step S920, the first product list and the second product list may be provided to the user through the user terminal and the display unit.

At this point, the first product list and the second product list may include the prices of the products in the list.

Through this, the user may confirm products of which the barcode is scanned using the barcode scanner. In addition, the higher the ratio of the products of which the barcode is scanned, the higher the membership points, and as the higher the membership points, the higher the discount rate, users are encouraged to place products on the transfer unit so that the barcodes may be scanned well. Accordingly, when the number of products of which the barcode is scanned increases, products that need verification by the manager decrease, and thus there is an effect of reducing the time required for product checkout.

The specific implementations described in the present invention are only exemplary embodiments and do not limit the scope of the present invention in any way. For the sake of brevity of the specification, descriptions of conventional electronic components, control systems, software, and other functional aspects of the systems may be omitted. In addition, connection of lines between the components shown in the drawings or connecting members exemplarily show functional connections and/or physical or circuit connections, and may be represented as various functional connections, physical connections, or circuit connections that can be replaced or added in an actual device. In addition, unless specifically mentioned as "essential", "important", or the like, a component may not be absolutely necessary for the application of the present invention.

Accordingly, the spirit of the present invention should not be limited to the embodiments described above, and all scopes equivalent to the scope of the patent claims or equivalently modified therefrom, as well as the scope of the patent claims described below, are considered to fall within the scope of the spirit of the present invention.

### INDUSTRIAL APPLICABILITY

According to the method and apparatus for product checkout in an unmanned store according to the embodiments of the present invention, as product checkout can be performed quickly and accurately by increasing the product recognition rate through artificial intelligence learning data, and the accuracy of product classification can be improved by using a product classification unit including conveyor belts, there is industrial applicability.

## Claims

1. An unmanned store product checkout apparatus comprising:
a first transfer unit for transferring a product to scan the product desired by a user to purchase;
a first product recognition unit installed at a first point where transfer of the product begins by the first transfer unit, to recognize that the product is placed on the first transfer unit;
a weight sensor installed at a lower one side of the first transfer unit, to measure a weight of the product;
a scan unit installed to be spaced apart from the first transfer unit toward the top as much as a preset distance, to scan a barcode and an image of the product transferred by the first transfer unit;
a processor for identifying what the product is by using artificial intelligence learning data on the basis of the barcode and image of the product scanned by the scan unit and the weight of the product measured by the weight sensor;
a product classification unit including a second transfer unit arranged to be in contact with a second point, where transfer of the product by the first transfer unit is terminated, to move the product left and right to be classified into a first area or a second area and classify the product by operating the second transfer unit on the basis of a result of product identification;
a calculation unit for calculating a total price by adding up both a first price obtained by adding prices of the products classified into the first area and a second price obtained by adding prices of the products classified into the second area and confirmed by a manager;
a display unit for providing the user with the total price, which is calculated by the calculation unit, and a product list; and
a control unit for controlling operations of the first transfer unit and the product classification unit on the basis of a result of product recognition performed by the first product recognition unit and a result of product identification performed by the processor.

2. The apparatus according to claim 1, wherein the scan unit includes:
a barcode scanner for recognizing the barcode of the product; and
an image scanner for acquiring image information by scanning the image of the product.

3. The apparatus according to claim 2, wherein the processor identifies the product as a scanned product corresponding to identification information included in the barcode when the barcode is recognized, acquires a product name and a character string from the image information and identifies the product as a scanned product on the basis of the image information, the product name, and the character string using artificial intelligence learning data when the barcode is not recognized, compares the weight of the product measured using the weight sensor with weight information included in product information corresponding to the scanned product, transmits a first signal indicating that the product has been normally identified to the control unit when the product is verified as a scanned product as a result of the comparison, and transmits a second signal indicating that the product has not been normally identified to the control unit when the product is not verified as a scanned product or it is verified that the product is not a scanned product as a result of the comparison.

4. The apparatus according to claim 3, wherein the control unit controls the product classification unit to move the product in a direction of the first area so that the product can be classified into the first area when the first signal is received from the processor, and controls the product classification unit to move the product in a direction of the second area so that the product can be classified into the second area when the second signal is received from the processor,.

5. The apparatus according to claim 4, wherein the first transfer unit includes:
a third transfer unit for transferring the product from the first point to a third point where scanning begins by the scan unit; and
a fourth transfer unit arranged to be in contact with the third transfer unit at the third point to transfer the product from the third point to the second point, wherein
the unmanned store product checkout apparatus further comprises a second product recognition unit installed at the third point to recognize that the product has arrived at the third point, and
the control unit controls the third transfer unit and the fourth transfer unit to operate when it is recognized that a product is placed through the first product recognition unit, controls the third transfer unit to stop the operation when it is recognized that the product has arrived at the third point through the second product recognition unit, and controls the third transfer unit to operate so that the product located at the third point may be transferred to the fourth transfer unit when there is no product of which the identification through the processor has not been completed.

6. An unmanned store product checkout method comprising the steps of:
receiving user information from a user terminal;
recognizing a product placed on a first transfer unit through a first product recognition unit;
scanning the product transferred by the first transfer unit through a scan unit when the product is recognized;
identifying the product through a processor on the basis of a result of scanning the product;
classifying the product into a first area or a second area through a product classification unit according to a result of the identification;
calculating a total price by adding up prices of the classified products through a calculation unit; and
providing the total price to the user terminal.

7. The method according to claim 6, wherein the step of scanning the product includes the steps of:
scanning a barcode and acquiring scanned product information corresponding to the barcode when the barcode of the product is recognized, and acquiring image information by scanning an entire image of the product when the barcode of the product is not recognized, specifying the product as an unconfirmed product when the barcode of the product is not recognized or the image information of the product is not acquired, and acquiring a product name of the product from the image information when the barcode of the product is not recognized after the step of scanning the product; and
acquiring scanned product information corresponding to the product, of which the image information is acquired, on the basis of the image information and the product name using artificial intelligence learning data, wherein
the artificial intelligence learning data includes data obtained by learning a size, a shape, a name, and a weight of products sold in an unmanned store.

8. The method according to claim 7, further comprising, after the step of recognizing a product placed on a first transfer unit, the step of measuring a weight of the product using a weight sensor, wherein
the step of classifying the product includes the steps of:
comparing weight information of a scanned product included in the scanned product information with a measured weight of the product;
classifying the product into the first area to be sent to a user when the product is verified as the scanned product as a result of the comparison, and classifying the product into the second area to be sent to the manager when the product is verified as a different product as a result of the comparison or when the product is an unconfirmed product; and
transmitting the number of products classified into the second area, device information, and the user information to a manager terminal.

9. The method according to claim 8, wherein the step of calculating a total price includes the step of recognizing both the products classified into the first area and the second area as products purchased by the user, and calculating a third price by adding up a first price obtained by adding prices of the products classified into the first area and a second price obtained by adding prices of the products classified into the second area, and
the step of providing the total price includes the steps of:
generating a product list including all the classified products; and
providing the product list and the third price to the user through the user terminal and a display unit.

10. The method according to claim 9, wherein the step of receiving user information includes the step of receiving membership information of the user generated using the user information, and
the product checkout method further comprises, after the step of providing the total price, the step of accumulating purchase points corresponding to the third price in membership points included in the membership information when payment for the products is completed by the user, wherein
the step of accumulating purchase points includes the step of granting additional purchase points at a preset first ratio corresponding to a ratio of the number of products purchased by the user to the number of products of which the barcode is recognized through the scan unit, and
the step of providing the total price includes the step of providing the user terminal with a fourth price obtained by applying a preset discount rate of a second ratio, corresponding to the section where the membership points are included, to the third price.
